Europäisches Patentamt

European Patent Office

Office européen des brevets

(19)

(11) Numéro de publication: **0 143 062**
**B1**

(12) **FASCICULE DE BREVET EUROPÉEN**

(45) Date de publication du fascicule du brevet:
**25.11.87**

(21) Numéro de dépôt: **84420179.8**

(22) Date de dépôt: **17.10.84**

(51) Int. Cl.⁴: **B 21 D 39/04,** B 21 D 39/06,
F 16 L 13/14

(54) **Méthode d'assemblage d'un tube mince dans une plaque ou un manchon.**

(30) Priorité: **21.10.83 FR 8317111**

(43) Date de publication de la demande:
**29.05.85 Bulletin 85/22**

(45) Mention de la délivrance du brevet:
**25.11.87 Bulletin 87/48**

(84) Etats contractants désignés:
**AT BE CH DE GB IT LI LU NL SE**

(56) Documents cité:
**EP-A-0 036 377**
**FR-A-1 102 168**
**FR-A-1 364 493**
**FR-A-1 482 536**
**FR-A-1 535 955**
**FR-A-1 550 596**
**FR-A-2 070 323**
**FR-A-2 356 463**
**US-A-2 174 218**
**US-A-3 283 402**
**US-A-3 792 603**
**US-A-3 828 412**

(73) Titulaire: **CEGEDUR SOCIETE DE TRANSFORMATION DE L'ALUMINIUM PECHINEY, 23, Rue Balzac, F-75008 Paris (FR)**

(72) Inventeur: **Baril, Jacques, Villa no 8 Le Petit Bois, F-38140 La Murette (FR)**
Inventeur: **Lagouanelle, Bernard, 32 bis, avenue de Courlis, F-78110 Le Vesinet (FR)**
Inventeur: **Ré, Angel, Noyarey, F-38360 Sassenage (FR)**

(74) Mandataire: **Séraphin, Léon, PECHINEY 28, rue de Bonnel, F-69433 Lyon Cedex 3 (FR)**

EP 0 143 062 B1

LIBER, STOCKHOLM 1987

## Description

L'invention se rapporte à une méthode d'assemblage d'un tube métallique dans une plaque ou un manchon par emmanchement axial à force, comme décrit dans le préambule de la revendication 1.

On connaît des assemblages réalisés par emmanchement à force d'un tube mince dans une plaque ou un manchon épais - voir par exemple le brevet FR-A-2 356 463.

Cependant, l'emmanchement à force, tel que revendiqué dans FR-A-2 356 463 ne permet pas une forte réduction de la section du tube mâle, sans application d'efforts excessifs conduisant généralement au flambage du tube.

Par ailleurs, si cet assemblage résiste bien aux efforts de traction longitulinaux, il résiste assez mal aux efforts de torsion (ou couple) dont l'axe est sensiblement celui de l'axe de l'assemblage.

La méthode suivant l'invention permet de pallier la première ou l'ensemble de ces difficultés.

Dans le texte suivant, plaque ou maichon désigne un organe dont les dimensions ou la nature sont telles qu'il ne subit pratiquement aucune déformation macroscopique, à faible distance (inférieure à 1 mm) de l'orifice où le tube est emmanché à force dans la direction de son axe. Si le manchon est à parois minces, il peut être renforcé provisoirement par une matrice extérieure lors de l'emmanchement.

Le tube doit présenter à la fois une certaine résistance et une certaine luctilité, par exemple un tube métallique, de manière à supporter sans détérioration d'une part l'effort axial d'emmanchement et d'autre part les déformations en rétreint de son extrémité qui en résulte lors de l'assemblage.

Le tube et l'orifice du manchon peuvent avoir des sections transversales quelconques mais homologues (circulaires, polygonales, elliptiques, etc).

Le terme "diamètre" sera étendu aux dimensions transversales (c'est-à-dire perpendiculaires à l'axe) du tube, du manchon ou de la plaque, lorsque les formes seront non circulaires bien que la description ne se réfère généralement, pour des raisons de clarté, qu'aux formes circulaires.

Le méthode d'assemblage consiste donc à effectuer au moins les opérations suivantes:

a) on usine à l'extrémité d'un tube à paroi relativement mince, dont le diamètre extérieur est supérieur au diamètre interne de l'orifice de la plaque ou du manchon, un chanfrein extérieur faisant un angle de 5 à 30°, avec l'axe du tube et dont le diamètre, à l'extrémité du tube, est inférieur ou égal au diamètre d'entrée de l'orifice de la plaque ou du manchon,

b) on perce dans le plaque (ou on utilise un manchon ayant) un orifice cylindrique de forme homothétique à celle de la section transversale extérieure du tube et on y usine une entrée convergente entre la surface frontale extérieure le la plaque ou du manchon et cet orifice,

c) on place le tube et l'orifice du manchon ou de la plaque face à face sur un même axe,

d) on emmanche axialement à force le tube dans la plaque ou le manchon, en réalisant ainsi l'assemblage.

La partie convergente du manchon ou de la plaque peut avoir soit une forme évasée en "pavillon de trompette" à partir de l'alésage interne ou être constituée de deux chanfreins coniques successifs, le premier adjacent à l'alésage interne faisant un angle de 5 à 15° avec l'axe, le second adjacent à la surface extérieure faisant un angle de 10 à 30° avec l'axe.

De préférence, l'angle du premier chanfrein est inférieur à celui du deuxième chanfrein et le demi-angle au sommet du chanfrein du tube est de préférence égal au demi-angle au sommet du premier ou du second chanfrein de la plaque ou du manchon.

Pour améliorer la résistance à la torsion d'un tel assemblage, on peut entre les opérations (b et c) ou (c et d) ci-dessus, enduire l'extrémité extérieure du tube (ou la face interne de l'alésage du manchon ou de la plaque) d'un adhésif adéquat, en vue de réaliser un collage de l'assemblage. Cet adhésif doit être choisi de manière à ne nécessiter aucun jeu entre les parties à assembler et à durcir à l'abri de l'air et, de préférence, à la température ambiante. (C'est le cas, par exemple, des colles "Loctite 262, 601, 638").

Il a été remarqué que les collages ainsi obtenus sont plus résistants si les pièces ont des surfaces initiales suffisamment rugueuses (valeur de Ra comprise entre 1,6 et 3,2 µm); ceci permet apparemment de mieux entraîner l'adhésif entre les surfaces à assembler. C'est le cas de l'état de surface des pièces de fonderie qui présentent un aspect "satiné", et des tubes filés ou laminés soudés, qui présentent de légères irrégularités longitudinales, dues à leur mode de fabrication.

Dans une variante préférentielle, le manchon (ou le tube) est muni d'au moins une cannelure ou d'une nervure à l'intérieur de l'alésage du manchon ou à l'extérieur de la surface latérale du tube. Ces cannelures ont de préférence une hauteur comprise entre 0,1 et 0,5 fois l'épaisseur du tube.

Les cannelures internes du manchon ou de la plaque peuvent être réalisees par tout moyen connu (moulage, brochage, fraisage, etc...). Les nervures externes du tube peuvent être réalisées par tout moyen connu tel que filage, usinage, etc...

Un cas particulier d'assemblage selon l'invention est cependant constitué par la fabrication du tube ou du manchon, à partir d'une feuille (ou d'une bande) par roulage et soudage longitudinal, l'excédent habituel d'épaisseur du cordon de soudure par rapport à la surface intérieure du manchon ou par rapport à la surface extérieure du tube constituant respectivement la cannelure ou la nervure correspondante.

Une autre manière d'obtenir une liaison plus résistante à la torsion est d'introduire dans le manchon ou la plaque, un noyau cylindrique ayant en section transversale une forme analogue à l'orifice de ces derniers, de manière à délimiter un espace annulaire d'épaisseur égale ou légèrement inférieure à l'épaisseur du tube et dont la longueur est légèrement supérieure (quelques mm), à l'alésage de l'orifice du manchon ou de la plaque. Bien sûr, cela s'applique essentiellement aux assemblages présentant une symétrie circulaire, mais également aux assemblages présentant une géometrie differente. Ce noyau est préalablement fixe de façon rigide au manchon ou à la plaque par tout moyen mécanique connu (encastrement, vissage, soudage, etc...). Par épaisseur de l'espace annulaire légèrement inférieure à l'épaisseur du tube, on entend une différence inférieure à 0,5 mm, de préférence 0,2 mm. L'utilisation d'un tel noyau permet en outre, d'éviter les flambages transversaux de l'extrémité du tube, lors de l'emmanchement.

Il en résulte une surface portante sensiblement deux fois plus grande par rapport à l'emmanchement simple. De la même manière que dans l'emmanchement simple, le noyau peut être cannelé longitudinalement ou le tube nervure sur sa surface interieure.

L'invention sera mieux comprise à l'aide des dessins et exemples suivants :

- la figure 1 explicite les caractéristiques géométriques à respecter pour appliquer la méthode selon l'invention.

- la figure 2 donne un exemple d'une autre variante des pièces avant assemblage, avec une vue extérieure du tube (2a), une coupe axiale du manchon (2b) et une vue en bout de ce dernier (2c).

- la figure 3 montre la liaison obtenue après assemblage de la variante présentée à la figure 2.

- la figure 4 est une vue en bout d'un tube roulé-soudé, apte à l'assemblage considéré, utilisé en tant que manchon.

- sur la figure 5, sont reportées les formes et dimensions (en mm) du manchon et du tube pour la réalisation d'un assemblage selon l'art antérieur (figure 5a) et selon l'invention (figure 5b) suivant l'exemple 1.

- la figure 6 représente une coupe axiale en long d'un emmanchement avec noyau interne.

- la figure 7 représente l'assemblage ainsi obtenu selon cette dernière variante.

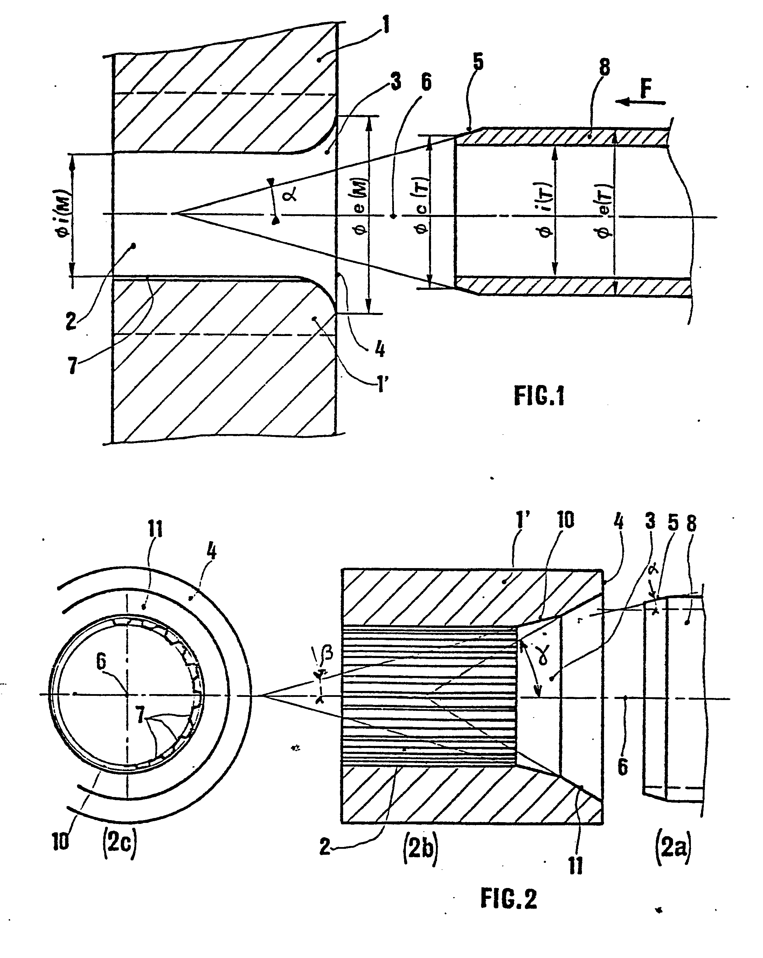

La figure 1 représente une plaque (1) ou un manchon (1') munie d'une ouverture (2) de diamètre interieur $\varnothing_i$ (M) muni d'une embouchure évasée (3) dont le diamètre maximal, à la surface extérieure (4), est $\varnothing_e$ (M).

Le tube à paroi mince (8), dont le diamètre extérieur est $\varnothing_e$ (T) et le diamètre intérieur est $\varnothing_i$ (T) est muni d'un chanfrein conique extérieur (5) de demi-angle au sommet $\alpha$ et dont le diamètre à l'extrémité du tube (8) est $\varnothing_c$ (T).

Pour emmancher à force le tube (8) dans l'ouverture (2) de la plaque (1) ou du manchon (1') dans le sens de la flèche F parallèlement à l'axe commun (6) du tube et du manchon, on doit avoir:

$$\varnothing_c (T) < \varnothing_e (M)$$
$$et \quad \varnothing_e (T) > \varnothing_i (M)$$

La plaque (1) ou le manchon (1') est de plus munie d'une rainure (7) longitudinale sur la surface interne de l'ouverture circulaire (2).

La figure 2 représente un autre mode de réalisation de l'invention. Le manchon (1') est percé d'un alésage (2) muni de deux chanfreins (10) et (11), le premier (10) adjacent à l'alésage (2) ayant un demi-angle au sommet ($\beta$) et le deuxième (11) adjacent à la surface frontale externe (4) ayant un demi-angle au sommet ($\gamma$). L'alésage intérieur peut être muni de cannelures (7).

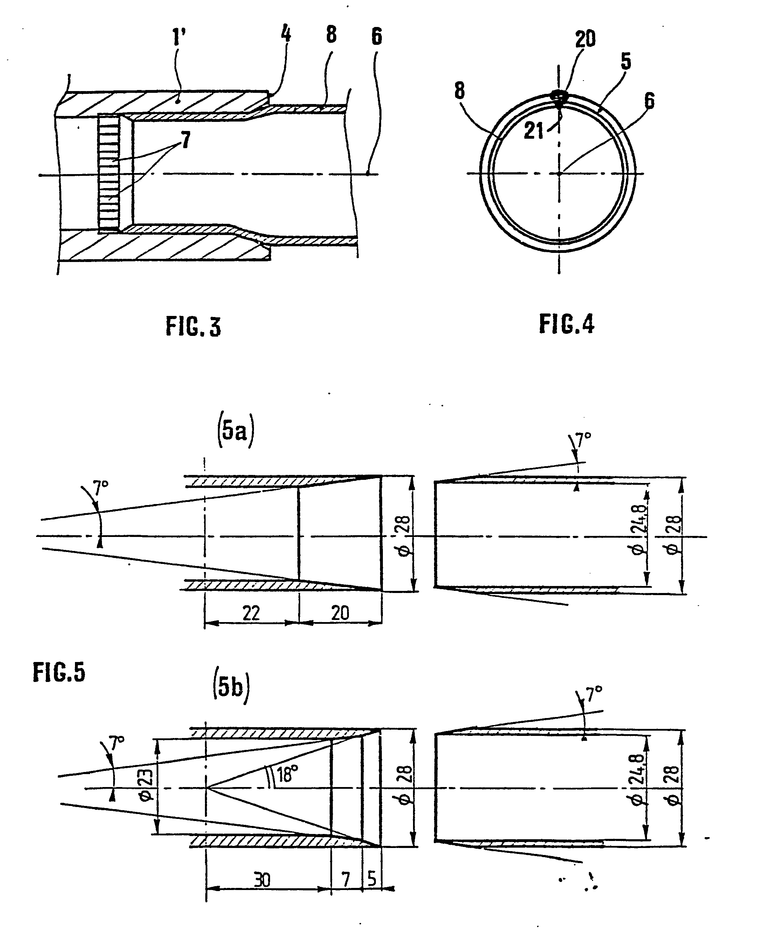

La figure 3 représente l'assemblage obtenu selon la variante représentée sur la figure 2.

La figure 4 représente la vue en bout d'un tube roulé-soudé, dont le cordon de soudure (20), qui présente une surépaisseur intérieure (21) constitue la cannelure interne du manchon, destinée à accroître la résistance à la torsion de l'assemblage.

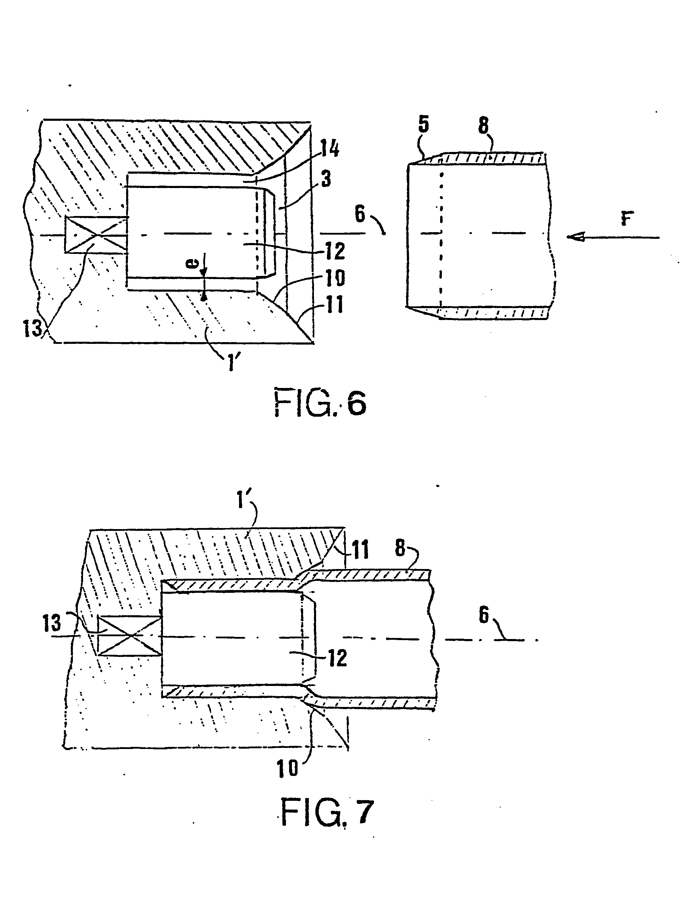

Sur la figure 6, le manchon (1') est muni au fond de l'orifice (2) d'un noyau cylindrique circulaire (12), d'axe (6), encastré à son extrémité par un goujon carré (13); ceci délimite un espace annulaire à base de couronne circulaire (14) dont l'epaisseur e est égale à l'epaisseur du tube (8), soit

$$\frac{\varnothing_c (T) - \varnothing_i (T)}{2}$$

la longueur utile du noyau (12) étant telle que son autre extrémité se projette dans l'ouverture (3) du manchon (1').

Sous l'effort d'emmanchement (F), le tube (8) est d'abord rétreint par le double chanfrein (11, 10), ce qui augmente corrélativement légèrement son épaisseur, puis emmanché à force dans l'espace (14) où il subit alors une légère diminution d'épaisseur. Il en résulte un assemblage très résistant à la fois à l'arrachement longitudinal (dans le sens contraire de la flèche F) et à la torsion suivant l'axe (6).

**Exemple 1**

Deux assemblages constitués d'un manchon en AS7G06 selon la norme AFNOR, NF A 02-004, et d'un tube sans soudure en alliage 5086, état H16 selon la désignation de l'Aluminium Association, ont été réalisés, le premier selon l'art antérieur (figure 5a), le manchon ne comportant qu'un seul chanfrein ($\alpha = \beta = 7°$) et le second selon l'invention (figure 5b), le manchon comportant un double chanfrein ($\alpha = \beta = 7°$, $\gamma = 18°$).

Les efforts nécessaires à l'assemblage réalisé sur une longueur de 42 mm dans les deux cas, ont été respectivement de 4000 et 3000 daN et les efforts d'arrachement axiaux de 1500 et 1100 daN. On note l'abaissement de l'effort d'emmanchement qui évite le flambage du tube lors de l'emmanchement.

Dans le tableau I sont rassemblés divers résultats d'essais effectués sur des assemblages suivant l'invention en fonction de divers paramètres et conditions d'essais.

Cette méthode présente les avantages suivants:

1. Par rapport aux assemblages collés classiques, elle évite
- l'usinage précis de pièces mâle et femelle pour ménager le logement du film de colle, dont l'épaisseur calibrée est généralement inférieure à 0,1 mm
- le montage pour positionner les deux élémente l'un par rapport à l'autre durant le collage
- le chauffage pour prise de la colle
- le redressage de l'assemblage après collage, celui-ci ayant été déformé lors du chauffage précédent.

2. Par rapport à la méthode d'assemblage décrite dans le brevet FR-A-2 729 677, une plus grande réduction de la section du tube, avec un effort d'emmanchement moindre, tout en diminuant la longueur totale du manchon, ce qui constitue un gain de matière. L'utilisation d'un manchon intérieur permet d'obtenir des assemblages résistant bien aux efforts d'arrachement et de torsion.

Ce type d'assemblage trouve son application dans les échafaudages, charpentes, structures portantes, châssis, cadres de bicyclettes, structures d'ULM, etc...

Voir tableau I page suivante.

### Tableau I

| Repère | Alliage | Manchon Ø (mm) | Epaisseur (mm) | Longueur totale (mm) | Angles β (°) | γ (°) | Ø Noyau (mm) | Alliage | Tube Ø extérieur | Epaisseur (mm) | α (°) | Réduction (%) | Résultat Emmanchement (daN) | Arrachement (daN) |
|---|---|---|---|---|---|---|---|---|---|---|---|---|---|---|
| 1 | (a) | 21 | 4,5 | 42 | 7 | 18 | 17,8 | (b) | 25 | 2 | 18 | 16 | 3700 | 1400 |
| 2 | (a) | 25 | 4,5 | 42 | 7 | 18 | - | (c) | 28 | 1,6 | 7 | 10,8 | 5000 | 2400 |
| 3* | (a) | 27 | 1,5 | 42 | 7 | 18 | - | (c) | 28 | 1,6 | 7 | 3,6 | 4200 | 2100 |
| 4 | (a) | 27 | 1,5 | 42 | 7 | 18 | - | (c) | 28 | 1,6 | 7 | 3,6 | 4500 | 1480 |
| 5 | (d) | 25 | 2,5 | 42 | 7 | 18 | - | (c) | 28 | 1,6 | 7 | 10,8 | 4000 | 1500 |
| 6** | (d) | 25 | 2,5 | 42 | 7 | 18 | - | (c) | 28 | 1,6 | 7 | 10,8 | 4000 | 2000 |
| 7 | (d) | 23 | 3,5 | 55 | 9 | 18 | - | (c) | 28 | 1,6 | 9 | 17,8 | 4000 | 2500 |
| 8 | (d) | 23 | 3,5 | 45 | 7 | 18 | - | (c) | 28 | 1,6 | 18 | 17,8 | 3000 | 1100 |

(a)     alliage AS7G0,6 Y23 usiné
(b)     tube en alliage 5754 état H111
(c)     tube en alliage 5086 état H16
(d)     alliage AS7G0,6 Y23 brut de coulée
*       collage avec "Loctite 601"
**      collage avec "Loctite 262"

### Revendications

1. Méthode d'assemblage à force d'un tube mince dans une plaque ou un manchon comportant au moins les opérations suivantes:

a) l'extrémité du tube (8), dont le diamètre extérieur $Ø_E$ (T) est supérieur au diamètre intérieur $Ø_i$ (M) de l'orifice de la plaque ou du manchon, est munie d'un chanfrein extérieur (5) faisant un angle α de 5 à 30°, avec l'axe (6) du tube, et dont le diamètre $Ø_C$ (T) à l'extrémité du tube est inférieur ou égal au diamètre d'entrée $Ø_E$ (M) de l'orifice de la plaque ou du manchon.

b) le manchon (1') ou la plaque (1) est percé(e) d'un orifice (2) de forme homothétique à la section transversale extérieure du tube et muni d'une entrée convergente en forme de pavillon ou de double chanfrein entre la surface frontale extérieure (4) du manchon ou de la plaque et cet orifice (2).

c) on place face à face le tube (8) et le manchon (1') ou la plaque (1) avec le même axe (6).

d) on emmanche axialement à force le tube (8) dans le manchon (1') ou la plaque (1).

caractérisé en ce que l'on place préalablement un noyau (12) dans l'orifice (2) de manière à délimiter un espace annulaire (14) dont la largeur est égale ou légèrement inférieure à l'épaisseur du tube (8) avant assemblage.

2. Méthode selon la revendication 1, caractérisée en ce que l'entrée convergente du manchon (1') ou de la plaque (1) est réalisée par deux chanfreins successifs (10, 11) faisant avec l'axe (6) un angle β compris entre 5 et 15° pour le premier (10) adjacent à l'alésage interne, et un angle γ compris entre 10 et 30° pour le second (11).

3. Méthode selon la revendication 2, caractérisée en ce que $\gamma \geqslant \beta$.

4. Méthode selon l'une des revendications 1 à 3, caractérisée en ce que $\alpha = \beta$.

5. Méthode selon l'une des revendications 1 à 3, caractérisée en ce que $\alpha = \gamma$.

6. Méthode selon l'un des revendications 1 à 5, caractérisé en ce que le manchon (1') ou la plaque (1) comporte au moins une cannelure (7) sur la surface interne de l'orifice (2).

7. Méthode selon l'une des revendications 1 à 6, caractérisée en ce que le tube (8) porte au moins une nervure sur sa surface latérale externe.

8. Méthode selon l'une des revendications 1 à 7, caractérisée en ce que le noyau (12) porte au moins une nervure ou cannelure longitudinale sur sa surface externe.

9. Méthode selon l'une des revendications 6 à 8, caractérisée en ce que les cannelures ou les nervures ont une hauteur comprise entre 0,1 et 0,5 fois l'épaisseur du tube (8).

10. Méthode selon l'une des revendications 6 à 9, caractérisée en ce que la cannelure ou la nervure est constituée par la surépaisseur d'un cordon de soudure (20) du tube (8) ou du manchon (1').

11. Méthode selon l'une des revendications 1 à 10, caractérisée en ce que le tube (8) et/ou le manchon (1) et/ou le noyau (12) sont enduits, avant assemblage, d'un produit adhésif faisant prise en l'absence d'air et à la température ambiante.

12. Méthode selon la revendication 11, caractérisée en ce que les surfaces des pièces en contact présentent une rugosité Ra comprise entre 1,6 et 3,2 μm.

13. Méthode selon l'une des revendications 1 à 12, caractérisée en ce que la différence entre l'épaisseur du tube (8) et la largeur de l'espace annulaire (14) est inférieure à 0,5 mm, de préférence 0,2 mm.

14. Méthode selon l'une des revendications 1 à 13, caractérisée en ce que l'extrémité libre du noyau se projette dans l'entrée (3) de l'orifice (2).

15. Méthode selon l'une des revendications 1 à 13, caractérisée en ce que le tube est nervuré sur sa surface intérieure.

**Patentansprüche**

1. Verfahren zum Einpressen eines dünnen Rohres in eine Platte oder Hülse, das mindestens die folgenden Schritte aufweist:

a) das Rohrende (8), dessen Außendurchmesser $\varnothing_E$ (T) größer als der Innendurchmesser $\varnothing_i$ (M) der Öffnung der Platte oder der Hülse ist, wird mit einer äußeren Abschrägung (5) versehen, die einen Winkel $\alpha$ von 5 bis 30° zur Rohrachse (6) einnimmt und dessen Durchmesser $\varnothing_C$ (T) am Rohrende kleiner oder gleich dem Eingangsdurchmesser $\varnothing_E$ (M) der Öffnung der Platte oder der Hülse ist;

b) die Hülse (1') oder die Platte (1) werden mit einer Öffnung (2) homothetischer Form bezüglich des äußeren Querschnitts des Rohres und mit einem konvergenten trichterförmigen oder doppelt abgeschrägten Eingangsbereich zwischen der frontalen Außenfläche (4) der Hülse oder der Platte und dieser Öffnung (2) versehen;

c) das Rohr (8) und die Hülse (1') oder die Platten (1) werden mit gleicher Achse einander gegenüber angeordnet;

d) das Rohr (8) wird unter Druck in die Hülse (1') oder die Platte (1) eingefügt;

dadurch gekennzeichnet, daß zuvor ein Kern (12) in die Öffnung (2) eingefügt wird derart, daß ein Ringraum (14), dessen Breite gleich oder etwas kleiner als die Dicke des Rohres (8) vor dem Zusammensetzen ist, eingegrenzt wird.

2. Verfahren nach Anspruch 1, dadurch gekennzeichnet, daß der konvergente Eingangsbereich der Hülse (1') oder der Platte (1) durch zwei aufeinanderfolgende Abschrägungen (10, 11) gebildet wird, die mit der Achse (6) einen Winkel $\beta$ einnehmen, der zwischen 5 und 15° für die erste Abschragung (10), die in die innere Öffnung angrenzt einnimmt und einen Winkel $\gamma$, der zwischen 10 und 30° für die zweite Abschrägung (11) liegt.

3. Verfahren nach Anspruch 2, dadurch gekennzeichnet, daß $\gamma \geqslant \beta$ ist.

4. Verfahren nach einem der Ansprüche 1 bis 3, dadurch gekennzeichnet, daß $\alpha = \beta$ ist.

5. Verfahren nach einem der Ansprüche 1 bis 3, dadurch gekennzeichnet, daß $\alpha = \gamma$ ist.

6. Verfahren nach einem der Ansprüche 1 bis 5, dadurch gekennzeichnet, daß die Hülse (1') oder die Platte (1) mindestens eine Riffelung auf der Innenseite der Öffnung (2) aufweist.

7. Verfahren nach einem der Ansprüche 1 bis 6, dadurch gekennzeichnet, daß das Rohr (8) mindestens eine Rippe auf seiner seitlichen Außenfläche trägt.

8. Verfahren nach einem der Ansprüche 1 bis 7, dadurch gekennzeichnet, daß der Kern (12) mindestens eine longitudinale Rippe oder Riffelung auf seiner Außenseite aufweist.

9. Verfahren nach einem der Ansprüche 6 bis 8, dadurch gekennzeichnet, daß die Rippen oder Riffelung eine Hülse zwischen 0,1 und 0,5 mal der Dicke des Rohrs (8) aufweisen.

10. Verfahren nach einem der Ansprüche 6 bis 9, dadurch gekennzeichnet, daß die Riffelung oder die Rippe aus in Überstand einer Schweißnaht (20) Rohres (8) oder der Hülse (1') bestehen.

11. Verfahren nach einem der Ansprüche 1 bis 10, dadurch gekennzeichnet, daß das Rohr (8) und/oder die Hülse (1') und/oder der Kern (12) vor dem Zusammensetzen mit einem Klebstoff versehen sind, der in Abwesenheit von Luft und bei Raumtemperatur aushärtet.

12. Verfahren nach Anspruch 11, dadurch gekennzeichnet, daß die Oberflächen der in Kontakt stehende Stücke eine Oberflächenrauhigkeit Ra haben, die zwischen 1,6 und 3,2 μm liegt.

13. Verfahren nach einem der Ansprüche 1 bis 12, dadurch gekennzeichnet, daß die Differenz zwischen der Rohrdicke (8) und der Breite des Ringraumes (14) kleiner als 0,5 mm, vorzugsweise 0,2 mm ist.

14. Verfahren nach einem der Ansprüche 1 bis 13, dadurch gekennzeichnet, daß das freie Ende des Kerns in den Eingang (3) der Öffnung (2) hineinragt.

15. Verfahren nach einem der Ansprüche 1 bis 13, dadurch gekennzeichnet, daß das Rohr auf seiner Innenseite geriffelt ist.

## Claims

1. A method of fitting a thin tube into a plate or a sleeve by forcing it therein comprising at least the following operations:

a) the end of the tube (8) whose outside diameter $\emptyset_e$ (T) is greater than the inside diameter of the opening in the plate or the sleeve $\emptyset_i$ (M) is provided with an external chamfer (5) forming an angle $\alpha$ of from 5 to 30° to the axis (6) of the tube and whose diameter at the end of the tube $\emptyset_c$ (T) is less than or equal to the entry diameter $\emptyset_e$ (M) of the opening in the plate or the sleeve,

b) the sleeve (1') or the plate (1) is provided with an opening (2) which is of homothetic form with respect to the outside cross section of the tube and provided with a convergent entry (3) between the outside front surface (4) of the plate or the sleeve and said opening (2)

c) the tube (8) and the sleeve (1') or the plate (1) are positioned in face-to-face relationship on the same axis (6), and

d) the tube (8) is axially forced into the sleeve (1') or the plate (1), thereby forming the join between the components

characterised in that a core (12) is previously placed in the opening (2) so as to define an annular space (14), the thickness of which is equal to or slightly less than that of the tube (8) before assembly.

2. A method according to claim 1 characterised in that the convergent entry of the sleeve (1') or the plate (1) is formed by two successive chamfers (10, 11) which form with respect to the axis (6) an angle $\beta$ between 5 to 15° for the first chamfer (10) and an angle $\gamma$ of between 10 to 30° for the second chamfer (11).

3. A method according to claim 2 characterised in that $\gamma > \beta$

4. A method according to one of claims 1 to 3 characterised in that $\alpha = \beta$

5. A method according to one of claims 1 to 3 characterised in that $\alpha = \gamma$

6. A method according to claims 1 to 5 characterised in that the sleeve (1') or the plate (1) comprises at least one spline (7) on the internal surface of the opening (2).

7. A method according to one of claims 1 to 6 characterised in that the tube (8) carries at least one rib on its outside lateral surface.

8. A method according to one of claims 1 to 7 characterised in that the core (12) presents at least one longitudinal spline or rib on its external surface.

9. A method according to one of claims 6 to 8 characterised in that the splines or the ribs are of a height of from 0.1 to 0.5 times the thickness of the tube (8).

10. A method according to one of claims 6 to 9 characterised in that the spline or the rib comprises the increased thickness formed by a weld bead (20) of the tube (8) or the sleeve (1').

11. A method according to one of claims 1 to 9 characterised in that the tube (8) and/or the sleeve (1') and/or the core (12) are coated before fitting with an adhesive which sets in the absence of air and at ambient temperature.

12. A method according to the claim 11 characterised in that the surface of pieces into contact have a degree of roughness Ra of between 1.6 to 3.2 μm.

13. A method according to one of the claims 1 to 12 characterised in that the difference in thickness between the tube (8) and the annular space (14) is less than 0.5 mm and preferably 0.2 mm.

14. A method according to one of the claims 1 to 13 cherscterised in that the free end of the core projects into the entry (3) of the opening (2).

15. A method according to one of claims 1 to 13 characterised in that the tube is ribbed on its inside surface.

FIG.1

FIG.2

**FIG. 3**

**FIG. 4**

(5a)

**FIG. 5**

(5b)

FIG. 6

FIG. 7